# EUROPÄISCHE PATENTSCHRIFT

(11) **EP 0 657 514 B1**
(45) Veröffentlichungstag und Bekanntmachung des Hinweises auf die Patenterteilung: **28.05.1997**
(21) Anmeldenummer: 94118545.6
(22) Anmeldetag: 25.11.1994
(51) Int. Cl.: C09D 127/12, C08J 3/03, C08L 27/12

(54) **Wässrige Dispersion von Fluorpolymerisaten, ihre Herstellung und Verwendung für Beschichtungen**
Aqueous dispersion of fluoropolymers, its manufacture and utilisation for coatings
Dispersion aqueuse de polymères fluorés, sa fabrication et son utilisation pour des revêtements

(30) Priorität: 01.12.1993 DE 4340943
(43) Veröffentlichungstag der Anmeldung: 14.06.1995
(73) Patentinhaber: Dyneon GmbH, 84504 Burgkirchen (DE)
(72) Erfinder: Blädel, Hermann, Dipl.-Ing., D-84547 Emmerting (DE); Felix, Bernd, Dr., D-84508 Burgkirchen (DE); Hintzer, Klaus, Dr., D-84556 Kastl (DE); Löhr, Gernot, Dr., D-84508 Burgkirchen (DE); Mitterberger, Wolf Dieter, Dr., D-84508 Burgkirchen (DE)

(56) Entgegenhaltungen:
- DE-A- 4 231 865
- FR-A- 2 078 077

## Beschreibung

Die Erfindung betrifft wäßrige Dispersionen von durch Emulsionspolymerisation gewonnenen, nicht aus der Schmelze verarbeitbaren, beim Sintern filmbildenden Fluorpolymeren, enthaltend ein Fluorpolymer A) mit einer mittleren Teilchengröße (Zahlenmittel) von 180 bis 400 nm und ein Fluorpolymer B) mit einer um den Faktor etwa 0,3 bis etwa 0,7 niedrigeren mittleren Teilchengröße, so daß die gesamte Dispersion eine nichtmonomodale Zahlenverteilung des Partikeldurchmessers besitzt.

Die Erfindung betrifft weiterhin Verfahren zur Herstellung solcher Dispersionen sowie ihre Verwendung für Beschichtungen. Nähere Einzelheiten und bevorzugte Ausgestaltungen der Erfindung werden im folgenden erläutert.

Die eingesetzten Fluorpolymere werden durch die bekannte Emulsionspolymerisation gewonnen und sind nicht aus der Schmelze verarbeitbar, das heißt, sie weisen eine Schmelzviskosität (Scherviskosität) bei 372 °C von ≥ 0,01 GPas, häufig von ≥ 1 GPas, bis zu etwa 900 GPas auf. Solche Polymerpulver sind aus der Schmelze nach üblichen Verarbeitungsmethoden für Fluorthermoplaste nicht verarbeitbar. Die Scherviskosität wird nach der Kriechtest-Methode von Ajroldi et al., beschrieben in J. appl. Polym. Sci. 14 (1970) 79 ff., bestimmt. Die Methode ist genauer beschrieben in US-A 4 036 802, Spalte 9, Zeile 46 bis Spalte 10, Zeile 41.

Die genannten mittleren Teilchengrößen verstehen sich als Zahlenmittel des Partikeldurchmessers der weitgehend kugelförmigen Teilchen, das sich durch Auszählung der in der elektronenmikroskopischen Aufnahme der Dispersion meßbaren Teilchendurchmesser ergibt. Bei nichtkugelförmigen Teilchen gilt als Teilchendurchmesser das geometrische Mittel der beiden Hauptachsen.

Bevorzugt hat das Fluorpolymer A) eine mittlere Teilchengröße von 180 bis 300 nm und das Fluorpolymer B) von 50 bis 150 nm.

Bezogen auf den Polymerfeststoffgehalt enthalten die bevorzugten erfindungsgemäßen Dispersionen 50 bis 95 Gew.-%, insbesondere 70 bis 95 Gew.-%, an Fluorpolymer A) und 5 bis 50 Gew.-%, vorzugsweise 5 bis 30 Gew.-%, insbesondere 5 bis 20 Gew.-%, an Fluorpolymer B).

Der Gehalt an Fluorpolymerfeststoff kann bei den erfindungsgemäßen Dispersionen in weiten Grenzen schwanken, beispielsweise von 10 bis 80 Gew.-%. Bevorzugt liegt er im Bereich von 30 bis 65 Gew.-%. Neben den genannten Fluorpolymeren A) und B) können die erfindungsgemäßen Dispersionen noch weitere Fluorpolymere enthalten, die mit den Fluorpolymeren A) und B) verträglich sind und bei der vorgesehenen Verwendung nicht stören. Solche Fluorpolymere, die als Füllstoffe angesehen werden können, sollen hier und im folgenden nicht gemeint sein, wenn auf den Polymerfeststoffgehalt Bezug genommen wird. Dieser Begriff soll sich also nur auf die Summe der erfindungsgemäß eingesetzten Fluorpolymere A) und B) beziehen.

Die Fluorpolymere A) und B) müssen sich nur hinsichtlich ihrer mittleren Teilchengröße unterscheiden, können aber hinsichtlich der Bruttozusammensetzung, des morphologischen Partikelaufbaus und des Molgewichtes gleich sein.

Die Fluorpolymere A) und B) sollen beim Sintern einen Film bilden, aber keine Fluorthermoplaste sein, die nach üblichen Methoden aus der Schmelze verarbeitbar sind. Bevorzugt als Fluorpolymere sind "modifizierte" Polytetrafluorethylene, also Copolymere aus Tetrafluorethylen und kleinen Mengen sogenannter Modifier wie Hexafluorpropen, Chlortrifluorethylen und Perfluor(alkylvinyl)ether mit Perfluoralkylgruppen von 1 bis 4 C-Atomen, insbesondere der n-Perfluorpropylgruppe. Diese Comonomeren oder Modifier können bis zu 2 Mol-% im Copolymer enthalten sein, wobei auch ein höherer Modifiergehalt zulässig ist, wenn das Molgewicht so hoch ist, daß das Copolymer nicht aus der Schmelze verarbeitbar ist. Derartige Copolymere haben generell einen Schmelzpunkt von über 290 °C.

Geeignete Polymere sind beispielsweise in der US-A 4 391 940 beschrieben. Die dort beschriebenen Polymeren haben einen inhomogenen Aufbau des Polymerpartikels, bestehend aus einem Kern, einer davon chemisch abweichenden inneren Hülle und einer wiederum davon abweichenden äußeren Hülle. Derartige Partikel sind als Beispiele für qualitativ inhomogene Partikel anzusehen. Bekannt sind auch quantitativ inhomogene Partikel, bei denen sich Kern und die anschließende Hülle oder Hüllen beispielsweise nur durch einen unterschiedlichen Gehalt an Modifier unterscheiden.

Beschichtungssysteme, die solche Fluorpolymere enthalten, sind seit langem bekannt, beispielsweise aus US-A 3 142 665, 3 790 403, 4 252 859 und EP-A 525 660. Sie werden beispielsweise zur Beschichtung von Metalloberflächen und Glasgeweben benutzt, wobei je nach Anwendung die Antihafteigenschaft, die Schmutzabweisung oder die Witterungsstabilität der Fluorpolymeren im Vordergrund stehen.

In der US-A 3 790 403 sind die Probleme beschrieben, die bei einem zu dicken oder zu schnellen Auftrag des Fluorpolymeren auftreten können, insbesondere eine Rißbildung. Bei dem dort beschriebenen Verfahren wird deshalb ein Glasgewebe zunächst mit einer Polytetrafluorethylen-Dispersion beschichtet und darüber eine Beschichtung aus einem aus der Schmelze verarbeitbaren Tetrafluorethylen-Copolymeren aufgebracht. Beim Sintern der Grundschicht schmilzt dann auch die Deckschicht, wodurch die Rißbildung vermindert werden soll. Die für die Deckschicht erforderlichen, aus der Schmelze verarbeitbaren Copolymeren sind jedoch aufgrund des relativ hohen Modifier-Gehalts teuer. Außerdem sind die so erhaltenen Beschichtungen relativ steif und nicht für alle Einsatzzwecke geeignet. Demgegenüber können erfindungsgemäß billigere Fluorpolymere zum Einsatz kommen. Weiterhin bietet die erfindungsgemäße Konzeption mit ihren Fluorpolymeren-Komponenten unterschiedlicher Teilchengröße die Möglichkeit, die Eigenschaften der Beschichtung an den jeweils gewünschten Zweck flexibel anzupassen.

Die erfindungsgemäßen Dispersionen erhält man im einfachsten Fall durch Vermischen von wäßrigen Dispersionen des Fluorpolymer A) mit einer entsprechenden Dispersion des Fluorpolymer B). Die Proportion der beiden Fluorpolymeren bemißt sich nach dem gewünschten Anwendungsgebiet und ist nötigenfalls durch einfache Vorversuche leicht zu ermitteln. Der Anteil der im Unterschuß vorliegenden Komponente muß so groß sein, daß die gesamte Dispersion eine nichtmonomodale Zahlenverteilung des Partikeldurchmessers aufweist.

Die feinteilige Fluorpolymer-Komponente B) kann zweckmäßig nach einem Verfahren für Saatpolymerisationen erhalten werden, wie sie beispielsweise in der US-A 4 391 940 beschrieben ist. Da die Herstellung einer solchen Saat aufwendiger als die Herstellung einer Dispersion mit gröberen Teilchen ist - bei niedrigerem Feststoffgehalt ist ein höherer Einsatz an kostspieligem Emulgator erforderlich - wird man im allgemeinen schon aus wirtschaftlichen Erwägungen das Fluorpolymer B) im Unterschuß einsetzen. Weiterhin nimmt die Viskosität der aufkonzentrierten Dispersionsmischung im allgemeinen mit steigendem Anteil des feinteiligen Fluorpolymeren B) zu, was für die Verarbeitung meist nicht vorteilhaft ist.

Neben der nachträglichen Vermischung der Fluorpolymer-Komponenten A) und B) können die erfindungsgemäßen Dispersionen auch durch geeignete Führung der Polymerisation erhalten werden, indem während der Polymerisation Maßnahmen getroffen werden, eine neue Partikelgeneration zu initiieren. Die Initiierung neuer Partikelgenerationen ist beispielsweise bei kontinuierlichen Emulsionspolymerisationen bekannt (Polymer Reaction Engineering, Ed. Reichert and Geiseler, Hüthig & Wepf, 1986). Bei nichtkontinuierlichen Verfahren kann durch nachträgliche Aufstockung der Flotte oder durch nachträgliche Zugabe von Emulgator während der Polymerisation die Bildung einer neuen Partikelgeneration eingeleitet werden.

Wie schon vorstehend erwähnt, kann der Feststoffgehalt an Fluorpolymer in der erfindungsgemäßen Dispersion in weiten Grenzen schwanken. Für viele Anwendungszwecke sowie zur Verminderung des Transportvolumens wird man höher konzentrierte Dispersionen einsetzen als sie durch Vermischen der Einzeldispersionen beziehungsweise bei der entsprechenden Führung einer Polymerisation zu einer bimodalen Teilchengrößenverteilung erhalten werden. In diesen Fällen wird man die Dispersion nach an sich bekannten Methoden aufkonzentrieren. Geeignet ist beispielsweise die Ultrafiltration (US-A 4 369 266), wobei üblicherweise anionische Tenside vom Typ des Natriumdodecylsulfonats oder nichtionische Tenside vom Typ der Alkylphenoloxethylate zugesetzt werden. Besonders vorteilhaft sind längerkettige Alkylaminoxide (US-A 5 219 910), die gut biologisch abbaubar sind.

Wenn die erfindungsgemäßen Dispersionen durch Vermischen von wäßrigen Dispersionen der Einzelkomponenten erhalten werden, erfolgt das Aufkonzentrieren zweckmäßig nach dem Vermischen der Komponenten. Überraschenderweise hat es sich gezeigt, daß die Viskosität der Dispersion nach dem Vermischen der beiden Dispersionen der Fluorpolymeren A) und B) niedriger ist als die der Dispersion A). Das Zumischen der Dispersion B) bewirkt also eine stärkere Herabsetzung der Viskosität als die Zugabe einer entsprechenden Menge Wasser. Weiterhin ist die Ultrafiltration nach vorherigem Vermischen der beiden Dispersionen der Fluorpolymeren A) und B) zu höheren Feststoffgehalten ohne Koagulation als bei den Dispersionen der Komponenten möglich.

Die Menge der zugesetzten Tenside richtet sich nach der Art des Aufkonzentrierungsverfahrens und auch nach dem späteren Anwendungszweck. Sie liegt im allgemeinen im Bereich von 4 bis 15 Gew.-%, bezogen auf den Polymerfeststoffgehalt. Sind die erfindungsgemäßen Dispersionen beispielsweise für die Metallbeschichtung vorgesehen, so wird ein relativ niedriger Tensidgehalt von etwa 5 Gew.-% ausreichen. Für die Beschichtung von Glasfasergeweben ist üblicherweise ein Tensidgehalt von 9 bis 11 Gew.-% erforderlich. In diesen Fällen wird man ein Tensid auswählen, das während oder nach der Filmbildung beim Sintern leicht abgetrennt wird.

Es wurde bereits vorstehend erwähnt, daß die erfindungsgemäßen Dispersionen außer den Fluorpolymeren A) und B) weitere Fluorpolymere enthalten können, die als Füllstoffe wirken können. Üblicherweise werden als Füllstoffe Pigmente, Glaskugeln oder faserförmige Füllstoffe wie Kohlenstoffasern eingesetzt. Bezogen auf den Polymerfeststoffgehalt beträgt die Gesamtmenge an Füllstoff bis zu etwa 40 Gew.-%, vorzugsweise 10 bis 25 Gew.-%.

Die erfindungsgemäßen Dispersionen können auch weitere Bestandteile enthalten, die sich nach dem beabsichtigten Einsatzzweck richten. Sind die Dispersionen beispielsweise für die Metallbeschichtung vorgesehen, so können sie die üblichen Bindeharze enthalten. Geeignet sind Filmbildner aus der Reihe der Polyamide, Polyimide und Polyamidimide. Derartige Zubereitungen können auch die üblichen Zusätze wie Polyphenylensulfid und dergleichen enthalten.

Die erfindungsgemäßen Dispersionen eigenen sich für die Herstellung von Überzügen auf glatten, porösen oder faserförmigen Materialien, beispielsweise zur Tränkung oder Imprägnierung von flächenförmigen oder nichtflächenförmigen Fasermaterialien oder porösen Stoffen, beispielsweise aus Graphit. An glatten Substraten seien Oberflächen aus Metall, Keramik, Glas oder Kunststoff genannt. Wie bereits erwähnt, kann bei der Beschichtung von Metallen das erforderliche Bindeharz der erfindungsgemäßen Dispersion zugesetzt werden oder aber die Metallfläche in bekannter Weise vorbehandelt werden.

Ein bevorzugtes Einsatzgebiet liegt in der Beschichtung von Glasfasergeweben. Gegenüber einer Behandlung mit vergleichenbaren Dispersionen der Einzelkomponenten können mit den erfindungsgemäßen Dispersionen die gewünschten Schichtdicken in signifikant weniger Verfahrensschritten erreicht werden, ohne daß es zu einer Rißbildung oder ungleichmäßigen Filmen kommt. Der Einsatz der erfindungsgemäßen Dispersionen bedeutet somit eine erhebliche Einsparung von Verfahrensschritten und damit eine beachtliche Ersparnis an Zeit und Kosten. Dieser Vorteil muß nicht durch Qualitätseinbußen erkauft werden, vielmehr zeigen die erfindungsgemäß erhaltenen Filme eine dichte Struktur und größere Härte als die mit den Einzelkomponenten erhaltenen Überzüge.

Die Erfindung wird in den folgenden Beispielen näher erläutert. Prozentangaben bedeuten Gewichtsprozente, sofern keine anderen Angaben gemacht sind.

### Beispiel 1

### Herstellung der Komponente B1):

Die Emulsionspolymerisation wird bei einer konstanten Temperatur von 35 °C und einem konstanten Tetrafluorethylen(TFE)-Druck von 15 bar in einem 150-l-Kessel durchgeführt. In den Kessel werden 100 l entionisiertes Wasser, das 90 g Ammoniumperfluoroctanoat, 25 g 25%ige wäßrige NH₃-Lösung und 0,43 g Natriumbisulfit enthält, eingefüllt. Der Kesselinhalt wird durch abwechselndes Spülen mit N₂ und Evakuieren von Luftsauerstoff befreit. Danach werden 200 g Hexafluorpropen (HFP) eindosiert und der Druck mit TFE-Gas auf 15 bar eingestellt. Die Reaktion wird durch Zudosierung einer 300-ml-Lösung, die 2,0 g Ammoniumpersulfat (APS) und 0,075 g CuSO₄ · 5H₂O enthält, innerhalb von 10 Minuten in Gang gebracht. Der TFE-Druck wird durch Nachführung von TFE konstant gehalten. Die umgesetzte TFE-Menge wird kontinuierlich gemessen. Wenn 11 kg TFE umgesetzt sind, wird die TFE-Zufuhr unterbrochen, der Kessel entspannt und das Restmonomer durch Evakuierung entfernt.

Die erhaltene Rohdispersion hat einen Feststoffgehalt von 10 %, das Polymere einen HFP-Gehalt von 0,45 %, die mittlere Teilchengröße beträgt 100 nm.

Der HFP-Gehalt wird IR-spektroskopisch durch Messung der Absorption bei 982 cm⁻¹ mit 2360 cm⁻¹ als Referenzbande bestimmt. Multiplikation mit 4,5 des Quotienten aus beiden Absorptionen ergibt die Angabe in Gewichtsprozent.

Die mittlere Teilchengröße wird hier indirekt durch inelastische Lichtstreuung mit einem Gerät der Firma Malvern Instruments, geeicht durch Elektronenmikroskopie, gemessen. Die Angabe bezieht sich auf das Zahlenmittel.

### Beispiel 2

### Herstellung der Komponente B2):

Beispiel 1 wird mit dem Unterschied wiederholt, daß anstelle von HFP 300 g Perfluor(propylvinyl)ether (PPVE) zugesetzt werden.

Der PPVE-Gehalt des Polymeren beträgt 0,9 %, die mittlere Partikelgröße 110 nm.

Der PPVE-Gehalt ergibt sich durch Multiplikation des Quotienten der Absorptionen bei 995 cm⁻¹ beziehungsweise 2360 cm⁻¹ mit dem Faktor 0,95.

### Beispiel 3

### Herstellung der Komponente A):

Die Herstellung dieser Komponente erfolgt analog dem in der US-A 4 391 940 beschriebenen Verfahren in Form einer sogenannten Saatpolymerisation. Als Saat wird die nach Beispiel 1 erhaltene Rohdispersion benutzt.

In einen 150-l-Kessel werden 20 l Rohdispersion nach Beispiel 1, 80 l entionisiertes Wasser, 80 g 25%ige wäßrige NH₃-Lösung, 2,5 g Diethylenglykol und 75 mg CuSO₄ · 5H₂O eingefüllt. Der Kesselinhalt wird durch Evakuieren und N₂-Spülung von Luftsauerstoff befreit. Die Temperatur wird auf 40 °C und der TFE-Druck auf 15 bar eingestellt. Sodann werden 0,75 g APS, in 300 ml H₂O gelöst, eindosiert. Die Reaktion wird durch kontinuierliche Zudosierung von 1 l einer wäßrigen Lösung in Gang gebracht, die 0,25 g Azodicarbonsäurediamid (ADA) in 25 ml 10%iger NaOH-Lösung gelöst enthält. Die Zudosierung erfolgt derart, daß die Polymerisationsgeschwindigkeit nicht abfällt.

Erreicht die umgesetzte TFE-Menge 23,5 kg, wird die ADA-Zudosierung unterbrochen. Dann werden in rascher Reihenfolge 0,2 g APS, 75 mg CuSO₄ · 5H₂O, in 100 ml H₂O gelöst, und 0,2 g Natriumbisulfit, ebenfalls in 100 ml H₂O gelöst, zudosiert. Die Reaktionsgeschwindigkeit steigt dadurch beträchtlich an. Sodann werden 250 g HFP zudosiert, wodurch die Reaktionsgeschwindigkeit stark abnimmt. Sind nach dieser Dosierung 1,5 kg TFE aufgenommen worden, so wird die Reaktion zum Erliegen gebracht, indem die Rührung abgestellt und der Kessel entspannt wird. Das Restmonomere wird nach üblichen Verfahren entfernt. Man erhält eine Dispersion mit einem Feststoffgehalt von 20,7 % und einer mittleren Teilchengröße von circa 220 nm. Der HFP-Gehalt des Polymeren beträgt 0,043 %. Die Latexpartikel sind dreischalig aufgebaut, wobei die äußere Schale etwa 5 % ausmacht.

### Beispiel 4

### Aufkonzentrierung:

Die nach den Beispielen 1 und 3 erhaltenen Rohdispersionen werden so gemischt, daß die grobteiligere Dispersion aus Beispiel 3 90 % zum Gesamtpolymeren beiträgt. Diese Mischung wird mit 11 % Nonylphenoloxethylat mit 10 Ethylenoxideinheiten, bezogen auf Fluorpolymere, versetzt und der pH-Wert der Mischung mit 25%iger wäßriger NH₃-Lösung auf circa 9 eingestellt. Die so vorbereitete Mischung wird einer Ultrafiltration nach US-A 4 369 266 unterworfen und dadurch auf einen Polymergehalt von 58 % aufkonzentriert.

Die Rohdispersionen werden außerdem getrennt, nach Versetzen mit der entsprechenden Menge Nonylphenoloxethylat mit 10 mol Ethylenoxideinheiten im Umlaufverdampfer aufkonzentriert. Die so erhaltenen Dispersionen mit einem Polymergehalt von 50 % werden zur Herstellung anderer Mischungen benutzt.

Die Einzelkomponenten sowie deren verschiedene Abmischungen werden sowohl als solche als auch in Gegenwart von 20 % Glaskugeln (d = 50 µm) bei Glasgewebebeschichtungen ausgeprüft.

### Beispiel 5

### Beschichtung von Glasgewebe:

Ein teilentschlichtetes Leichtglasgewebe (Typ 91121, Firma Interglas, Ulm) mit einem Flächengewicht von 200 g/m² wird mit Hilfe einer Beschichtungsapparatur mit einer Dispersion getränkt, getrocknet und gesintert. Die Fördergeschwindigkeit beträgt 0,3 m/min, die Temperaturen der Heizzonen betragen etwa 150 °C, 280 °C und 400 °C. Der Auftrag wird visuell - nach Auftreten von Rissen oder Haarrissen - beurteilt. Die in der Tabelle 1 aufgeführten Dispersionen beziehungsweise Dispersionsmischungen haben alle den gleichen Polymergehalt, nämlich 58 %, und den gleichen Gehalt an Nonylphenoloxethylat (wie vorstehend beschrieben), nämlich 11 %, bezogen auf das Polymer. Der gewichtsmäßige Anteil der Beschichtung wird gravimetrisch bestimmt.

Die Beschichtung wird solange wiederholt, bis eine Auftragsmenge von > 55 % erreicht wird. Hierzu sind im allgemeinen sechs Beschichtungsvorgänge nötig.

In Tabelle 1 ist diejenige Auftragsmenge in Gewichtsprozent angegeben, ab der Haarrisse auftreten.

**Tabelle 1**

| Gew.-% der Komponente A | Komponente B | Auftragsmenge [Gew.-%] | Beurteilung |
|---|---|---|---|
| 100 | B1 | 38,9 | Haarrisse |
| 95 | B1 | 50,1 | Haarrisse |
| 90 | B1 | 58,2 | rißfrei |
| 80 | B1 | 45,1 | Haarrisse |
| 70 | B1 | 46,1 | Haarrisse |
| 50 | B1 | 39,5 | Haarrisse |
| 0 | B1 | 28,8 | Haarrisse |
| 95 | B2 | 48,4 | Haarrisse |
| 90 | B2 | 49,5 | Haarrisse |
| 82 | B2 | 59,3 | rißfrei |
| 70 | B2 | 50,3 | Haarrisse |
| 0 | B2 | 29,2 | Risse |

### Beispiel 6

Die Beschichtung wurde an einem teilentschlichteten, sogenannten schweren Glasgewebe (Typ B 18030, Firma Verseidag, Krefeld) mit einem Flächengewicht von 360 g/m² unter vergleichbaren Bedingungen wie in Beispiel 5 durchgeführt. Jedoch wurden bei der zweiten Beschichtung der Dispersion 20 Gew.-% Glaskugeln mit d = 50 µm (Typ 3000, Firma Ballotini, Italien) und außerdem 0,5 %, jeweils bezogen auf das Fluorpolymer, Acrylatverdicker (®VISCALEX VG 2, Allied Colloids, Hamburg) zugesetzt.

In Tabelle 2 sind die Ergebnisse für die einzelnen Durchgänge zusammengestellt.

**Tabelle 2**

| 90 % A) + 10 % B1) | | | |
|---|---|---|---|
| Durchgang | Füllung | Auftragsmenge [Gew.-%] | Beurteilung |
| 1 | --- | 28,4 | rißfrei |
| 2 | 20 % Glaskugeln | 40,7 | rißfrei |
| 3 | --- | 46,8 | rißfrei |
| 4 | --- | 51,8 | rißfrei |

Tabelle 3 zeigt das Ergebnis für die Komponente A).

**Tabelle 3**

| 100 % Komponente A) | | | |
|---|---|---|---|
| Durchgang | Füllung | Auftragsmenge [Gew.-%] | Beurteilung |
| 1 | --- | 28,4 | rißfrei |
| 2 | 20 % Glaskugeln | 42,3 | rißfrei |
| 3 | --- | 45,5 | Haarrisse |
| 4 | --- | 46,1 | Haarrisse |
| 5 | --- | 49,8 | Haarrisse |
| 6 | --- | 52,0 | Haarrisse |

Dieses Beispiel demonstriert nicht nur die bessere Qualität der erfindungsgemäßen Dispersionsmischung, sondern auch, daß die angestrebte Auftragsmenge von über 50 % bereits mit vier Durchgängen erreicht werden kann. Auf diese Beschichtung wird in bekannter Weise eine Mischung aus einer Dispersion eines Copolymeren aus 96 % Tetrafluorethylen und 4 % Perfluor-(n-propyl-vinyl)-ether, im folgenden "PFA" genannt, sowie von Polytetrafluorethylen aufgetragen, um die Verschweißbarkeit einzelner Gewebebahnen zu ermöglichen. Die Gesamtauftragsmenge soll hierbei bei über 55 % liegen, was nur durch einen vorherigen rißfreien Auftrag von mehr als 50 % an Fluorpolymeren erreicht werden kann.

### Beispiel 7

### Metallbeschichtung:

Im folgenden beziehen sich die Prozentangaben auf den jeweiligen Feststoffgehalt in der angegebenen Zusammensetzung. "Netzmittel" bedeutet ein Octylphenoloxethylat mit 10 Ethylenoxideinheiten. "Polyamidimid" bedeutet Poly-(2,4,5-triketoimidazolidino-diphenylmethano-N,N'-diphenylmethano-bis-imino-trimellithsäureamid), hergestellt durch Umsetzung des Reaktionsproduktes aus Trimellithsäureanhydrid und 4,4'-Diaminodiphenylmethan mit 4,4'-Bis-ethoxyalkylaminodiphenylmethan und 4,4'-Diisocyanatodiphenylmethan. Zur Wasserverdünnbarkeit wird dieses Produkt mit einer wäßrigen Lösung eines tertiären Amins umgesetzt.

Eine sandgestrahlte Aluminiumpfanne wird mit einem wäßrigen Primer, bestehend aus einer Mischung aus 5 % Polyamidimid, 4 % Netzmittel, 1,5 % Rußpigment, 3 % Xylol und 25 % PFA (in Form einer 50%igen Dispersion), beschichtet und bei 90 °C getrocknet. Auf diese Schicht wird die folgende wäßrige Deckschicht-Rezeptur appliziert: 3 % Polyamidimid, 1,2 % Netzmittel, 2 % Rußpigment, 6 % Xylol sowie 40 % Fluorpolymer (in Form einer 58%igen Dispersion). Die Beschichtung wird bei 90 °C und dann bei 280 °C getrocknet und anschließend 15 Minuten bei 400 °C gesintert. Als Fluorpolymerdispersion wurde einerseits eine erfindungsgemäße Mischung aus 90 % der Komponente A) und 10 % der Komponente B1) und andererseits zum Vergleich 100 % der Komponente A) eingesetzt.

An den so hergestellten Beschichtungen wurde die Härte nach der französischen Norm NF D 21.511, Punkt 3.6, bei Raumtemperatur jeweils an 20 Pfannen gemessen. Bei dieser Meßvorschrift ist das Maß für die Härte das Gewicht, mit der die kugelförmige Sonde belastet wird, um die Beschichtung zu durchdringen.

Bei Verwendung der erfindungsgemäßen Fluorpolymermischung (in der Deckschicht) waren 1,8 kg, bei der reinen Komponente A) 1,3 kg (Mittelwerte) erforderlich.

Die erfindungsgemäße Dispersion verbessert also signifikant die auf diese Weise gemessene Härte.

## Patentansprüche

1. Wäßrige Dispersion von durch Emulsionspolymerisation gewonnenen, nicht aus der Schmelze verarbeitbaren, beim Sintern filmbildenden Fluorpolymeren, enthaltend ein Fluorpolymer A) mit einer mittleren Teilchengröße (Zahlenmittel) von 180 bis 400 nm und ein Fluorpolymer B) mit einer um den Faktor etwa 0,3 bis etwa 0,7 niedrigeren mittleren Teilchengröße, so daß die gesamte Dispersion eine nichtmonomodale Zahlenverteilung des Partikeldurchmessers besitzt.

2. Dispersion nach Anspruch 1, enthaltend, bezogen auf den Polymerfeststoffgehalt, 50 bis 95 Gew.-%, vorzugsweise 70 bis 95 Gew.-%, an Fluorpolymer A) und 5 bis 50 Gew.-%, vorzugsweise 5 bis 30 Gew.-% an Fluorpolymer B).

3. Dispersion nach einem oder mehreren der vorhergehenden Ansprüche, dadurch gekennzeichnet, daß der Fluorpolymerfeststoffgehalt 10 bis 80 Gew.-%, vorzugsweise 30 bis 65 Gew.-%, beträgt.

4. Dispersion nach einem oder mehreren der vorhergehenden Ansprüche, dadurch gekennzeichnet, daß das Fluorpolymer A) eine mittlere Teilchengröße von 180 bis 300 nm und/oder das Fluorpolymer B) eine mittlere Teilchengröße von 50 bis 150 nm hat.

5. Dispersion nach einem oder mehreren der vorhergehenden Ansprüche, dadurch gekennzeichnet, daß sie, bezogen auf den Polymerfeststoffgehalt, 4 bis 15 Gew.-% an einem Tensid enthält.

6. Dispersion nach einem oder mehreren der vorhergehenden Ansprüche, dadurch gekennzeichnet, daß sie, bezogen auf den Polymerfeststoffgehalt, bis zu 40 Gew.-%, vorzugsweise 10 bis 25 Gew.-%, an Füllstoffen enthält.

7. Verfahren zur Herstellung einer Dispersion nach einem oder mehreren der vorhergehenden Ansprüche, dadurch gekennzeichnet, daß man eine wäßrige Dispersion des Fluorpolymeren A) mit einer wäßrigen Dispersion des Fluorpolymeren B) mischt und gegebenenfalls auf den gewünschten Feststoffgehalt, vorzugsweise auf ein Feststoffgehalt von 40 bis 65 Gew.-%, aufkonzentriert.

8. Verwendung der Dispersionen nach den Ansprüchen 1 bis 6 zur Tränkung, Imprägnierung oder Beschichtung von Oberflächen.

9. Verwendung der Dispersionen nach den Ansprüchen 1 bis 6 zur Formulierung von Metallbeschichtungssystemen.

10. Verwendung der Dispersionen nach den Ansprüchen 1 bis 6 zur Tränkung oder Imprägnierung von Fasern oder Flächengebilden aus Fasern oder porösen Stoffen und zur Beschichtung von Glasfasergeweben.

## Claims

1. An aqueous dispersion of fluoropolymers which are obtained by emulsion polymerization, are not processable from the melt and form a film on sintering, which comprise a fluoropolymer A) having an average particle size (number average) of from 180 to 400 nm and a fluoropolymer B) having an average particle size which is lower by a factor of from about 0.3 to about 0.7, so that the total dispersion has a non-monomodal number distribution of the particle diameter.

2. A dispersion as claimed in claim 1, comprising, based on the polymer solids content, from 50 to 95 % by weight, preferably from 70 to 95 % by weight, of fluoropolymer A) and from 5 to 50 % by weight, preferably from 5 to 30 % by weight, of fluoropolymer B).

3. A dispersion as claimed in one or more of the preceding claims, wherein the fluoropolymer solids content is from 10 to 80 % by weight, preferably from 30 to 60 % by weight.

4. A dispersion as claimed in one or more of the preceding claims, wherein the fluoropolymer A) has an average particle size of from 180 to 300 nm and/or the fluoropolymer B) has an average particle size of from 50 to 150 nm.

5. A dispersion as claimed in one or more of the preceding claims, which comprises, based on the polymer solids content, from 4 to 15 % by weight of a surfactant.

6. A dispersion as claimed in one or more of the preceding claims, which comprises, based on the polymer solids content, up to 40 % by weight, preferably from 10 to 25 % by weight, of fillers.

7. A process for preparing a dispersion as claimed in one or more of the preceding claims, which comprises mixing an aqueous dispersion of the fluoropolymer A) with an aqueous dispersion of the fluoropolymer B) and, if desired, concentrating the mixture to the desired solids content, preferably to a solids content of from 40 to 65 % by weight.

8. Use of the dispersions as claimed in any of claims 1 to 6 for soaking, impregnating or coating surfaces.

9. Use of the dispersions as claimed in any of claims 1 to 6 for the formulation of metal coating systems.

10. Use of the dispersions as claimed in any of claims 1 to 6 for soaking or impregnating fibers or planiform articles of fibers or porous materials and for coating fiberglass fabrics.

## Revendications

1. Dispersion aqueuse de polymères fluorés obtenue par polymérisation en émulsion que l'on ne peut pas traiter à l'état fondu, filmogènes au cours du frittage, contenant un polymère fluoré A) ayant une granulométrie moyenne (moyenne en nombre) de 180 à 400 nm et un polymère fluoré B) ayant une granulométrie moyenne inférieure d'un facteur d'environ 0,3 à 0,7 de façon telle que la totalité de la dispersion possède une distribution non modale en nombre du diamètre de particules.

2. Dispersion selon la revendication 1, contenant par rapport à la teneur en matières solides polymères, de 50 à 95 % en poids, de préférence de 70 à 95 % en poids de polymère fluoré A) et de 5 à 50 % en poids, de préférence de 5 à 30 % en poids de polymère fluoré B).

3. Dispersion selon une ou plusieurs des revendications précédentes, caractérisée en ce que la teneur en matières solides polymères est de 10 à 80 % en poids, de préférence de 30 à 65 % en poids.

4. Dispersion selon une ou plusieurs des revendications précédentes, caractérisée en ce que le polymère fluoré A) a une granulométrie moyenne de 180 à 300 nm et/ou le polymère fluoré B) une granulométrie moyenne de 50 à 150 nm.

5. Dispersion selon une ou plusieurs des revendications précédentes, caractérisée en ce qu'elle contient de 4 à 15 % en poids d'un agent de surface par rapport à la teneur en matières solides polymères.

6. Dispersion selon une ou plusieurs des revendications précédentes, caractérisée en ce qu'elle contient jusqu'à 40 % en poids, de préférence de 10 à 25 % en poids de charges par rapport à la teneur en matières solides polymères.

7. Procédé pour la préparation d'une dispersion selon une ou plusieurs des revendications précédentes, caractérisé en ce qu'on mélange une dispersion aqueuse du polymère fluoré A) avec une dispersion aqueuse du polymère fluoré B) et éventuellement on concentre à la teneur en matières solides désirées, de préférence à une teneur en matières solides de 40 à 65 % en poids.

8. Utilisation des dispersions selon les revendications 1 à 6 pour l'imbibition, l'imprégnation ou le revêtement de surface.

9. Utilisation des dispersions selon les revendications 1 à 6 pour la formulation de systèmes de revêtement de surfaces métalliques.

10. Utilisation des dispersions selon les revendications 1 à 6 pour l'imbibition ou l'imprégnation de fibres ou d'objets en fibres ou de matières poreuses et pour le revêtement de toile en fibres de verre plans.
